(19) Europäisches Patentamt
European Patent Office
Office européen des brevets

(11) **EP 4 443 261 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **24165064.7**

(22) Anmeldetag: **21.03.2024**

(51) Internationale Patentklassifikation (IPC):
**G05D 1/242** *(2024.01)*    **G01S 17/931** *(2020.01)*
**G05D 1/622** *(2024.01)*    **G05D 105/28** *(2024.01)*
**G05D 107/70** *(2024.01)*    **G05D 109/10** *(2024.01)*
**G05D 111/10** *(2024.01)*

(52) Gemeinsame Patentklassifikation (CPC):
**G05D 1/622; G01S 17/931; G05D 1/2427;**
G05D 2105/28; G05D 2107/70; G05D 2109/10;
G05D 2111/17

(54) **VERFAHREN ZUM BESTIMMEN EINER TRAJEKTORIE FÜR EIN AUTONOMES FAHRZEUG**

METHOD FOR DETERMINING A TRAJECTORY FOR AN AUTONOMOUS VEHICLE

PROCÉDÉ DE DÉTERMINATION DE TRAJECTOIRE POUR UN VÉHICULE AUTONOME

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:   **03.04.2023   DE 102023203060**

(43) Veröffentlichungstag der Anmeldung:
**09.10.2024   Patentblatt 2024/41**

(73) Patentinhaber: **Robert Bosch GmbH**
**70442 Stuttgart (DE)**

(72) Erfinder:
• **Gies, Fabian**
  **89077 Ulm (DE)**
• **Van Duijkeren, Niels**
  **70806 Kornwestheim (DE)**

(56) Entgegenhaltungen:
**EP-A1- 2 952 928      EP-A1- 3 059 650**
**US-B1- 6 173 215**

**Beschreibung**

Die vorliegende Erfindung betrifft ein Verfahren zum Bestimmen einer Trajektorie, entlang welcher sich ein mobiles Gerät, z.B. ein Roboter oder ein sich zumindest teilautomatisiert bewegendes Fahrzeug, in einer Umgebung bewegen soll, eine Recheneinheit und ein Computerprogramm zu dessen Durchführung sowie ein mobiles Gerät.

Hintergrund der Erfindung

In verschiedenen Bereichen kommen mobile Geräte, insbesondere Roboter, Drohnen oder sich zumindest teilautomatisiert bewegende Fahrzeuge wie z.B. sog. AGVs ("Automated Guided Vehicles") zum Einsatz. Solche mobilen Geräte bewegen sich typischerweise entlang einer Trajektorie oder eines Bewegungspfades in einer Umgebung wie z.B. einer Wohnung, in einem Garten, in einer Fabrikhalle oder auf der Straße, in der Luft oder im Wasser. Die Trajektorie wird hierzu z.B. so geplant bzw. bestimmt, dass sie möglichst kurz ist, wenn ein bestimmtes Ziel erreicht werden soll. Dabei sollten Hindernisse bzw. Objekte in der Umgebung berücksichtigt werden. Ebenso ist ein Wunsch oftmals, dass das mobile Gerät ein bestimmtes Ziel möglichst schnell erreicht. Die EP 3 059 650 A1 beschäftigt sich mit Überwachungszonen für ein sich bewegendes mobiles Gerät. Die EP 2 952 928 A1 betrifft eine Lidar-Überwachung und die US 6 173 215 B1 betrifft eine klassische Sicherheitsüberwachung.

Offenbarung der Erfindung

Erfindungsgemäß werden ein Verfahren zum Bestimmen einer Trajektorie, eine Recheneinheit und ein Computerprogramm zu dessen Durchführung sowie ein mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit mobilen Geräten, die sich entlang einer Trajektorie in einer Umgebung bewegen bzw. bewegen sollen. Eine Trajektorie umfasst hierbei einen Bewegungspfad und einen Geschwindigkeitsverlauf entlang des Bewegungspfads. Die Trajektorie kann z.B. Positionen und/oder Orientierungen des mobilen Geräts und zusätzlich einem Geschwindigkeitsverlauf, z.B. Zeitpunkte, zu denen diese Positionen und/oder Orientierungen gelten sollen; damit wird also auch eine bestimmte Geschwindigkeit entlang oder auf dem Bewegungspfad vorgegeben. Diese Geschwindigkeit kann entlang des Bewegungspfades auch veränderlich sein, z.B. an Kurven geringer als an geraden Abschnitten. Dabei können einer oder mehrere mögliche Bewegungspfade vorgegeben sein. Die Trajektorie soll dann eine Bewegung entlang des einen (dann kommt es nur noch auf die Geschwindigkeit an) oder eines der mehreren Bewegungspfade (dann kann eine Auswahl getroffen werden) bewegen.

Beispiele für solche mobilen Geräte sind z.B. Roboter und/oder Drohnen und/oder auch sich teilautomatisiert oder (vollständig) automatisiert (zu Land, Wasser oder in der Luft) bewegende Fahrzeuge. Als Roboter kommen z.B. Haushaltsroboter wie Saug- und/oder Wischroboter, Boden- oder Straßenreinigungsgeräte oder Rasenmähroboter in Betracht, ebenso aber auch andere sog. Service-Roboter, als auch sich zumindest teilweise automatisiert bewegende Fahrzeuge z.B. Personenbeförderungsfahrzeuge oder Güterbeförderungsfahrzeuge (auch sog. Flurförderfahrzeuge, z.B. in Lagerhäusern, auch automatisierte Gabelstapler), aber auch Luftfahrzeuge wie sog. Drohnen oder Wasserfahrzeuge. Außerdem kommen als mobile Gerät Teile von Robotern, z.B. ein Roboterarm mit einem Manipulator in Betracht.

Das Erzeugen von Bewegungen mit minimaler Zeitdauer entlang z.B. eines bestimmten Bewegungspfades ist dabei in häufig zu lösendes Problem. Ein mobiles Gerät, das eine Aufgabe schneller ausführt, ist in der Regel effizienter, so dass weniger mobile Geräte für den Betrieb benötigt werden. Bei fahrerlosen Transportfahrzeugen (AGVs), die meist in geraden Linien auf reservierten Fahrspuren fahren, ist die Höchstgeschwindigkeit des jeweiligen AGVs in der Regel das wichtigste Kriterium. Bei Roboterarmen, bei denen das Problem prinzipiell sehr ähnlich ist, wird es durch die zusätzliche Komplexität der Kinematik und Dynamik deutlich schwieriger. Dabei können mobile Geräte, die in unübersichtlichen Umgebungen arbeiten, in der Regel nicht kontinuierlich mit Höchstgeschwindigkeit fahren. Daraus ergibt sich die Frage, wie man zeitminimale Trajektorien bestimmen kann.

Ein weiterer Aspekt, der beim Bestimmen von Trajektorien für solche mobile Geräte zu berücksichtigen ist, betrifft Sicherheitsüberwachungen ("safety monitors"). Hierunter ist zu verstehen, dass ein mobiles Gerät wie z.B. ein AGV über eine Möglichkeit zur Erfassung der Umgebung und insbesondere dem Erkennen von Objekten bzw. Hindernissen verfügt. Dies dient z.B. der Sicherheit, um Kollisionen des mobilen Geräts mit Hindernissen zu vermeiden. Hierbei kann z.B. ein Abstand von Hindernissen in der Umgebung erfasst werden, z.B. mittels Lidar bzw. einem Lidar-Sensor. Hierbei können verschiedene Überwachungszonen definiert sein, wobei jede der verschiedenen Überwachungszonen jeweils einen Bereich um das mobile Gerät, vorzugsweise in Fahrtrichtung, definiert, in welchem Bereich das mobile Gerät die Umgebung überwacht oder überwachen soll. Wird ein Hindernis in einer aktuell zugeordneten Überwachungszone erkannt, wird typischerweise eine Aktion durchgeführt. Diese kann z.B. ein Manöver wie ein Abbremsen oder Ausweichen des mobilen Geräts sein, um eine Kollision zu verhindern.

Dem mobilen Gerät sind dabei in Abhängigkeit von einer Geschwindigkeit des mobilen Geräts eine oder mehrere verschiedene Überwachungszonen zuzuordnen. Die Geschwindigkeit kann dabei eine longitudinale Geschwindigkeit, eine laterale Geschwindigkeit, oder eine Winkelgeschwindigkeit umfassen, oder auch eine beliebige Kombination davon. Die zuzuordnenden Überwachungszonen können dabei auch von der Art der Geschwindigkeit abhängen. So können z.B. bei einer Kurvenfahrt Überwachungszonen in Richtung der Kurve größer sein. Auch kann ein Lenkwinkel des mobilen Geräts, sofern einstellbar, einen Einfluss auf die zu zuordnende Überwachungszone haben. Es sei hierbei erwähnt, dass die Überwachungszonen z.B. nur zweidimensional (2D), ebenso aber auch dreidimensional (3D) sein können.

Während sich die Geschwindigkeit des mobilen Geräts (zumindest bis zur Höchstgeschwindigkeit) in der Regel beliebig, also kontinuierlich, ändern kann, sind die Überwachungszonen diskreter Natur. Dies bedeutet, dass sich die zugeordneten Überwachungszonen für einen bestimmen Geschwindigkeitsbereich des mobilen Geräts nicht ändern, bei Überschreiten einer bestimmten Geschwindigkeitsschwelle jedoch schlagartig. So wird dann z.B. der überwachte Bereich deutlich ausgeweitet. Ein Grund für diese diskrete Natur liegt z.B. darin, dass damit nur eine bestimmte Anzahl an verschiedenen Überwachungszonen bei der Auswertung zur Erkennung von Hindernissen berücksichtigt werden muss, was eine schnellere Verarbeitung erlaubt. Zudem ist diese Art der Überwachungszonen im Bereich der Robotik etabliert und der am häufigsten verwendete Ansatz. Außerdem ist zu beachten, dass die Wahl einer endlichen Anzahl von Zonen, die von Algorithmen zur Überprüfung möglicher Kollisionen verwendet werden, dazu beiträgt, die Komplexität des Sicherheitsnachweises für das gesamte Robotersystem zu verringern.

Bei einem mobilen Gerät, dem solche Überwachungszonen zugewiesen sind bzw. das solche Überwachungszonen verwendet, besteht beim Bestimmen einer Trajektorie jedoch die Gefahr, dass eine Trajektorie bestimmt wird, bei der das mobile Gerät später unnötig eine Aktion aufgrund eines (in gewisser Entfernung) erkannten Hindernisses durchführt. Dies würde zu unnötigen Verzögerungen oder gar längeren Unterbrechungen führen, was dem Ziel einer möglichst schnellen Trajektorie zuwiderläuft.

Vor diesem Hintergrund wird vorgeschlagen, dass zum Bestimmen einer solchen Trajektorie ein Satz von verschiedenen Überwachungszonen bereitgestellt wird. Es kann sich hierbei insbesondere um diejenigen Überwachungszonen handeln, die für das betreffende mobile Gerät verwendet werden können oder verwendet werden sollen. Je nach Art des mobilen Geräts, je nach Art der implementierten Überwachungsfunktionalität oder auch je nach Art der Umgebung, in der sich das mobile Gerät bewegen soll, können die Anzahl und Art oder Größer der verschiedenen Überwachungszonen unterschiedlich sein. Wie erwähnt, definiert jede der verschiedenen Überwachungszonen jeweils einen Bereich um das mobile Gerät, in welchem Bereich das mobile Gerät die Umgebung überwacht oder überwachen soll. Dabei ist ein Zuordnungskriterium vorgesehen, gemäß welchem dem mobilen Gerät in Abhängigkeit von einer Geschwindigkeit des mobilen Geräts eine Überwachungszonenkonfiguration zugeordnet ist oder wird; eine Überwachungszonenkonfiguration umfasst eine vorbestimmte Überwachungszone des Satzes. Dabei kann eine Überwachungszonenkonfiguration z.B. bei größerer Geschwindigkeit eine größere Überwachungszone als bei kleinerer Geschwindigkeit umfassen. Dabei ist es zweckmäßig, wenn die zugeordnete Überwachungszone immer ausgehend vom mobilen Gerät (bzw. einem Sensor) gewählt sind, typischerweise in etwa in Fahrtrichtung. Unabhängig von der Art der Zuordnung wird aber eine Diskretisierung vorliegen.

Weiterhin wird ein Zulässigkeitskriterium bereitgestellt, das eine zulässige aus dem Satz der verschiedenen Überwachungszonen angibt; hier kann ein Benutzer z.B. vorgeben, welche Überwachungszone akzeptiert werden soll, z.B. auch abhängig von der Umgebung oder den möglichen Bewegungspfaden. Damit kann z.B. erreicht werden, dass nur eine solche Überwachungszone (und damit auch Überwachungszonenkonfiguration) zugelassen wird, bei der sichergestellt werden kann, oder bei der zumindest davon ausgegangen werden kann, dass die erwähnte Aktion des mobilen Geräts nicht ausgelöst wird.

Weiterhin wird dann eine Sequenz von kritischen Geschwindigkeiten für das mobile Gerät bestimmt, und zwar basierend auf dem Satz von verschiedenen Überwachungszonen, vorzugsweise auch basierend auf dem einen oder den mehreren möglichen vorgegebenen Bewegungspfaden. Durch den einen oder die mehreren möglichen vorgegebenen Bewegungspfade sind insbesondere jeweils mögliche Geschwindigkeiten für das mobile Gerät vorgegeben; so kann z.B. für eine Kurve bzw. eine Kurvenfahrt ein gewisses Verhältnis von longitudinaler zu Winkelgeschwindigkeit vorgegeben sein. Auch können durch den einen oder die mehreren möglichen vorgegebenen Bewegungspfade weiterhin jeweils einer oder mehrere mögliche Lenkwinkel für das mobile Gerät vorgegeben sein. Bei einem Fahrzeug, bei dem ein Lenkwinkel einstellbar ist, führt eine bestimmte Kurve z.B. zu einem bestimmten, nötigen Lenkwinkel.

Die kritischen Geschwindigkeiten geben dabei jeweils eine maximal zulässige Geschwindigkeit für das mobile Gerät für jeweils eine Überwachungszonenkonfiguration an. Wie erwähnt, gilt eine Überwachungszonenkonfiguration für einen gewissen Geschwindigkeitsbereich; dort kann dann eine maximale Geschwindigkeit bestimmt werden. Bei einer Kurvenfahrt kann die Geschwindigkeit z.B. eine longitudinale und eine Winkelkomponente haben.

Die Trajektorie wird dann basierend auf der Sequenz von kritischen Geschwindigkeiten und basierend auf dem Zulässigkeitskriterium bestimmt, insbesondere im Rahmen einer Optimierung bzw. einem Optimierungsverfahren. Hierzu wird eine ausgewählte, insbesondere maximale, kritische Geschwindigkeit aus der Sequenz von kritischen Geschwindigkeiten bestimmt, sodass eine der ausgewählten kritischen Geschwindigkeit zuzuordnende Überwachungszonenkonfiguration dem Zulässigkeitskriterium genügt. Damit wird also z.B. eine maximale Geschwindigkeit gefunden, bei der davon ausgegangen werden kann, dass die Aktion des mobilen Geräts nicht ausgelöst wird. Die Trajektorie wird dann basierend auf der ausgewählten kritischen Geschwindigkeit bestimmt.

Weiterhin wird die Trajektorie dann bereitgestellt, insbesondere kann das mobile Gerät veranlasst werden, sich gemäß der Trajektorie zu bewegen. Basierend auf der Trajektorie können z.B. Bewegungssteuergrößen (also z.B. Ansteuergrößen für das Antriebssystem wie z.B. Momente, Lenkvorgaben und dergleichen) für das mobile Gerät bestimmt und bereitgestellt werden, insbesondere kann das mobile Gerät auch basierend auf den Bewegungssteuergrößen gesteuert werden. Hierzu kann z.B. ein Steuer- oder Regeleinheit zum Ansteuern eines Antriebssystems vorgesehen sein.

Eine erfindungsgemäße Recheneinheit, z.B. ein Steuergerät oder eine Steuereinheit eines mobilen Geräts, ist, insbesondere programmtechnisch, dazu eingerichtet, ein erfindungsgemäßes Verfahren durchzuführen.

Die Erfindung betrifft auch ein mobiles Gerät, z.B. einen Roboter, eine Drohne oder ein sich zumindest teilautomatisiert bewegendes Fahrzeug (z.B. ein AGV), das eingerichtet ist, eine Trajektorie oder Bewegungssteuergrößen zu erhalten. Das mobile Gerät weist dann ein Antriebssystem und eine Steuer- oder Regeleinheit zum Ansteuern des Antriebssystems basierend auf der Trajektorie und/oder den Bewegungssteuergrößen auf. Auch kann das mobile Gerät eine erfindungsgemäße Recheneinheit aufweisen. Wie schon erwähnt, kann das mobile Gerät dazu eingerichtet sein, eine Aktion (z.B. ein Abbremsmanöver) auszuführen, wenn ein Hindernis in der dem mobilen Gerät aktuell zugeordneten Überwachungszonenkonfiguration erkannt wird. Hierzu kann das mobile Gerät auch einen oder mehrere Sensoren oder Sensoreinheiten, z.B. Lidar-Sensoren, aufweisen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1a    zeigt schematisch ein mobiles Gerät in einer Umgebung zur Erläuterung der Erfindung.

Figur 1b    zeigt das mobiles Gerät aus Figur 1a zur Erläuterung der Erfindung in einer anderen Ansicht

Figur 2    zeigt schematisch einen Ablauf eines erfindungsgemäßen Verfahrens in einer bevorzugten Ausführungsform.

Figuren 3a bis 3d    zeigen Diagramme zur Erläuterung eines erfindungsgemäßen Verfahrens in einer bevorzugten Ausführungsform.

Figuren 4a bis 4d    zeigen Diagramme zur Erläuterung eines erfindungsgemäßen Verfahrens in einer weiteren bevorzugten Ausführungsform.

Detaillierte Beschreibung der Zeichnung

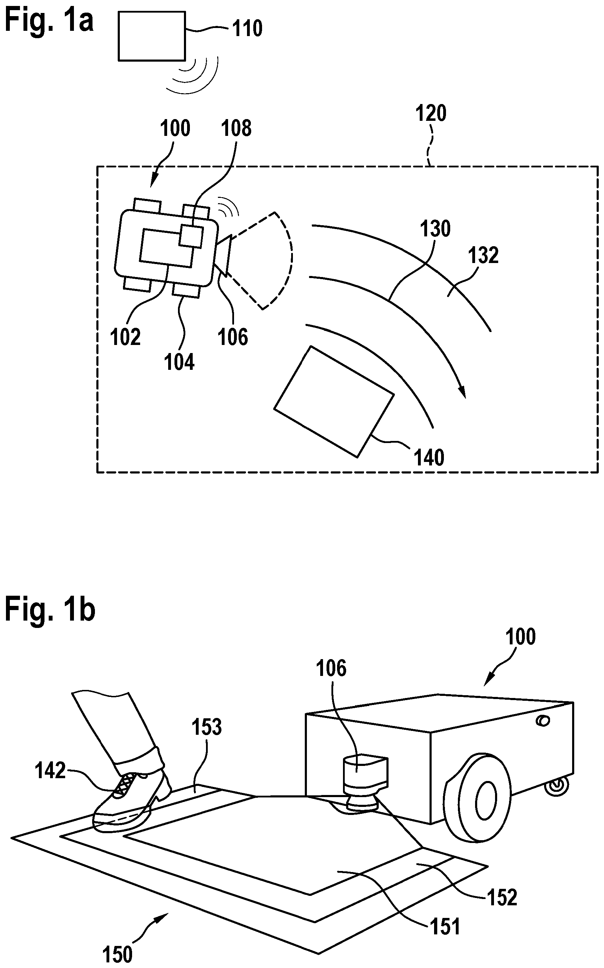

In Figur 1a ist schematisch ein mobiles Gerät 100 in einer Umgebung 120 dargestellt, anhand dessen die Erfindung erläutert werden soll. Beispielhaft handelt es sich bei dem mobilen Gerät 100 um ein selbstfahrendes Fahrzeug, z.B. ein AGV. Es versteht sich, dass das mobile Gerät auch von anderer Art sein kann, wie vorstehend erläutert. Das mobile Gerät 100 weist hierbei eine als Steuereinheit ausgebildete Recheneinheit 108, die z.B. drahtlos datenübertragend mit der übergeordneten Recheneinheit 110 verbunden ist, sowie beispielhaft einen Lidar-Sensor 106 auf.

Weiterhin weist das mobile Gerät 100 ein Antriebssystem 104 und eine Steuer- oder Regeleinheit 102 zum Ansteuern des Antriebssystems 104 basierend auf Trajektorien oder Bewegungssteuergrößen auf.

In der Umgebung 120 ist beispielhaft ein möglicher Bewegungspfad 132 angedeutet, dem das mobile Gerät 100 z.B. folgen kann oder soll, d.h. entlang dessen es sich bewegen soll. Hierzu kann eine Trajektorie 130 bestimmt werden, die nicht nur den letztlich von dem mobilen Gerät zu befolgenden Bewegungspfad (es könnten auch alternative mögliche Bewegungspfade vorhanden sein) angibt, sondern auch eine Geschwindigkeit. Zudem ist beispielhaft ein Hindernis 140 in der Umgebung gezeigt.

In Figur 1b ist das mobile Gerät 100 aus Figur 1a in einer perspektivischen Ansicht gezeigt, wobei hier insbesondere ein Lidar-Sensor 106 zu sehen ist. Mittels des Lidar-Sensors 104 können in einem gewissen Bereich 150 um das mobile Gerät 100 die Umgebung bzw. potenzielle Hindernisse darin erkannt werden. Beispielhaft ist ein Fuß 142 als Hindernis dargestellt. In dem Bereich 150 kann es verschiedene Überwachungszonen geben, beispielhaft sind die Überwachungszonen 151, 152, 153 bezeichnet. Dabei gibt es insbesondere immer eine bestimmte Überwachungszone, die betrachtet wird, also z.B. das Rechteck 151. Die Überwachungszone 152 hingegen kann das Rechteck der Überwachungszone 151 sowie den daran angrenzenden U-förmigen Bereich einschließen. Die Überwachungszone 153 kann z.B. zusätzlich den weiteren U-förmigen Bereich ganz außen einschließen. Es sei erwähnt, dass jede Überwachungszone vorzugsweise eine eigenständige Zone ist, und nicht eine Zusammensetzung separater Zonen. Generell können verschieden Überwachungszonen überlappen (wie in Figur 1b gezeigt), aber auch separat voneinander sein. Bevorzugt werden die Überwachungszonen derart eingestellt oder vorgegeben, dass spezifische Safety-Normen eingehalten werden, und das mobile Gerät bei Auslösen der Überwachungszone immer noch zum Stehen kommen kann, und das statische Hindernis nicht erreicht wird. Hierbei werden (Auslegung der Norm) insbesondere statische Objekte bzw. Hindernisse betrachtet. Außerdem können Überwachungszonen in der Praxis auch komplexer sein, z.B. in Form eines beliebigen Polygons. Je nach aktueller Geschwindigkeit des mobilen Geräts 100 kann eine andere dieser Überwachungszonen 151, 152, 153 aktiv sein, d.h. ein dort erkanntes Hindernis löst eine Aktion wie z.B. ein Abbremsen aus. In dem gezeigten Beispiel wird der Fuß in der Überwachungszone 153 erkannt.

Alle Überwachungszonen, die für ein bestimmtes mobiles Gerät und/oder eine bestimmte Umgebung vorgesehen sein, können in einem Satz zusammengefasst sein. Beispielsweise können alle in Figur 1b gezeigten Überwachungszonen (die Überwachungszonen 151, 152, 153) diesen Satz bilden. Wie bereits erwähnt, kann dem mobilen Gerät gemäß einem vorgegebenen Zuordnungskriterium in Abhängigkeit von einer Geschwindigkeit eine Überwachungszonenkonfiguration zugeordnet sein, die jeweils eine vorbestimmte Überwachungszone des Satzes der verschiedenen Überwachungszonen umfasst. So könnten bei maximaler Geschwindigkeit des mobilen Geräts 100 z.B. die in Figur 1b gezeigte Überwachungszone 153 zu einer aktuellen Überwachungszonenkonfiguration gehören, bei geringer Geschwindigkeit hingegen z.B. aber nur die Überwachungszone 152 oder gar nur 151. In diesem Fall würde das mobile Gerät 100 die Aktion nicht durchführen bzw. diese würde nicht ausgelöst.

Um nun für ein solches mobiles Gerät eine Trajektorie zu bestimmen, die einen Geschwindigkeitsverlauf entlang eines Bewegungspfads angibt, kann ein Optimierungsproblem gelöst werden. Dies kann als grundsätzlich möglich angenommen werden. Wie erwähnt, würde aber, wenn die mögliche Geschwindigkeit, die das mobile Gerät hierbei annehmen kann, als dessen Höchstgeschwindigkeit genommen würde, die Gefahr bestehen, dass eine große Überwachungszonenkonfiguration auftritt, die unnötigerweise zu einer Aktion des mobilen Geräts führt. Nachfolgend soll beschrieben werden, wie dies umgangen werden kann.

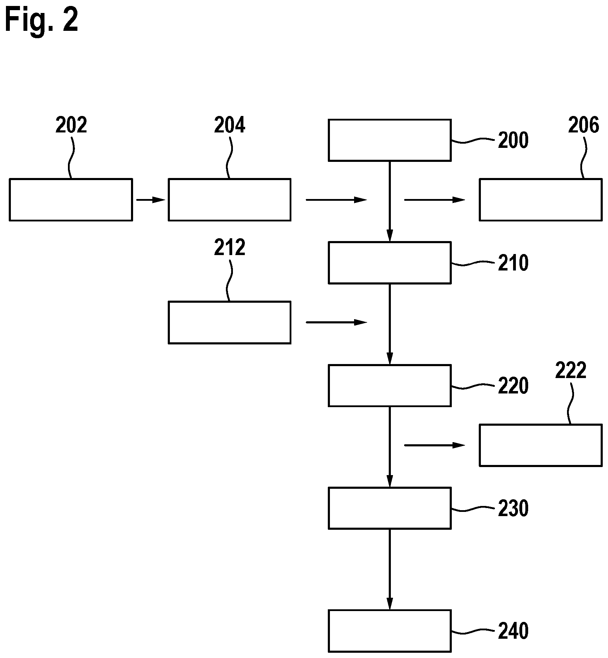

In Figur 2 ist ein Ablauf eines erfindungsgemäßen Verfahrens in einer bevorzugten Ausführungsform dargestellt. In einem Schritt 200 wird zunächst ein Satz 202 von verschiedenen Überwachungszonen bereitgestellt; jede der verschiedenen Überwachungszonen definiert dabei jeweils einen Bereich um das mobile Gerät, in welchem Bereich das mobile Gerät die Umgebung überwacht oder überwachen soll. Solche Überwachungszonen sind beispielhaft in Figur 1b dargestellt. Dem mobilen Gerät ist dabei gemäß einem vorgegebenen Zuordnungskriterium 204 in Abhängigkeit von einer Geschwindigkeit des mobilen eine Überwachungszonenkonfiguration 206 zugeordnet ist, die jeweils eine vorbestimmte Überwachungszone des Satzes der verschiedenen Überwachungszonen umfasst.

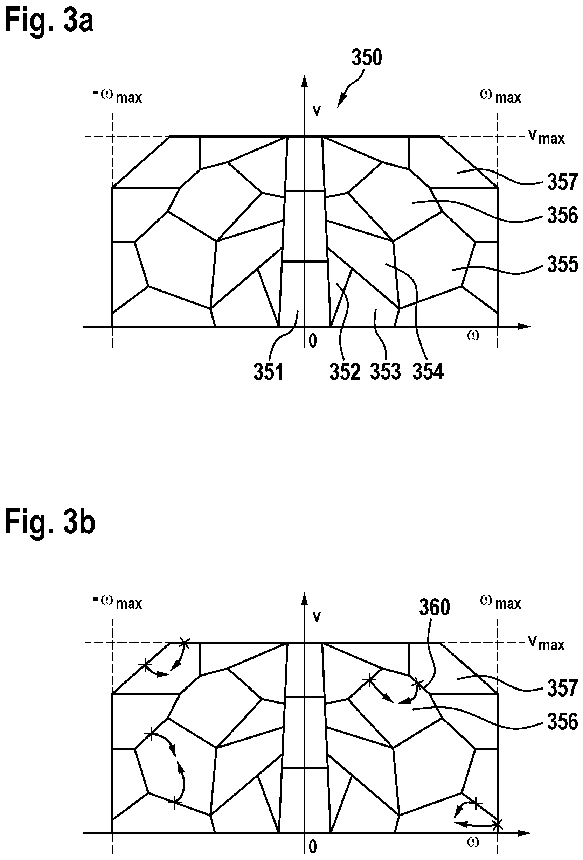

In Figur 3a ist, in einem Diagramm, ein Bereich 350 dargestellt, der verschiedene Geschwindigkeitsbereiche (hier beispielhaft in 2D) umfasst. Hierzu sind eine longitudinale Geschwindigkeit v und eine Winkelgeschwindigkeit $\omega$ auf den Achsen gezeigt, die mögliche Geschwindigkeiten des mobilen Geräts angeben. Der Ursprung (0,0) steht dabei für Stillstand. Eine maximale longitudinale Geschwindigkeit ist mit $v_{max}$ bezeichnet und minimale und maximale Winkelgeschwindigkeit (vorzeichenbehaftet, also z.B. links und rechts fahrend) sind mit - $\omega_{max}$ und $\omega_{max}$ bezeichnet. Auch für die longitudinale Geschwindigkeit könnten negative Werte berücksichtigt werden. Die generell möglichen Geschwindigkeiten des mobilen Geräts werden also durch einen Punkt in dem Diagramm bezeichnet, der die minimalen bzw. maximalen Geschwindigkeiten nicht überschreitet. Denkbar ist, dass maximale longitudinale Geschwindigkeit und maximale Winkelgeschwindigkeit nicht gleichzeitig erreichbar sind.

Der Bereich 350 umfasst hier verschiedene Geschwindigkeitsbereiche, von denen einige beispielhaft mit 351, 352, 353, 354, 355, 356, 357 bezeichnet sind. Bei den Geschwindigkeitsbereiche handelt es sich z.B. um konvexe Bereiche. Je nach Geschwindigkeit des mobilen Geräts kann diesem dann eine andere Überwachungszone zugeordnet sein, die über eine Überwachungszonenkonfiguration angegeben ist. Dabei wird jeder Geschwindigkeit innerhalb eines Geschwindigkeitsbereiche dieselbe Überwachungszone zugeordnet. Dabei wird z.B., falls die Geschwindigkeit in dem Geschwindigkeitsbereich 351 liegt, eine flächenmäßig kleineren Überwachungszone zugeordnet sein, da der Bremsweg in der Regel kürzer sein wird, als wenn die Geschwindigkeit in dem Geschwindigkeitsbereich 357 liegt.

Es versteht sich, dass auch hier die Situation nicht auf den zweidimensionalen (2D) Fall beschränkt ist, wenngleich dies hier der einfacheren Darstellbarkeit halber der Fall ist. Die Geschwindigkeitsbereiche können also z.B. nur zweidimensional (2D), ebenso aber auch dreidimensional (3D) sein.

In einem Schritt 210 wird ein Zulässigkeitskriterium 212 bereitgestellt, das eine zulässige Überwachungszone aus dem Satz 202 der verschiedenen Überwachungszonen angibt. Damit kann z.B. von einem Benutzer festgelegt werden, welche Überwachungszone zugelassen ist, da damit voraussichtlich keine Aktion ausgelöst würde. So könnte z.B. die Überwachungszonen 152 zugelassen werden. Mit anderen Worten kann der Benutzer die Überwachungszone so angeben, dass das mobile Gerät eine bestimmte Sicherheitsnorm erfüllt. Trotzdem ist der Benutzer aber z.B. motiviert, die größtmöglichen Geschwindigkeiten und Drehraten zu verwenden. Jedem Geschwindigkeitsbereich aus Figur 3a, also z.B. 357, wird also z.B. eine spezifische Überwachungszone, z.B. 153 zugeordnet (für jeden Sensor), um die Sicherheitsfunktion zu gewährleisten und gleichzeitig die schnellste Fahrt zu ermöglichen. Hierbei ist schon zu sehen, dass dies zu einer Einschränkung der möglichen Geschwindigkeiten führt. Eine Prüfung, ob das Zulässigkeitskriterium erfüllt ist, erfolgt jedoch erst später, wie noch zu erläutern ist.

In einem Schritt 220 wird dann eine Sequenz 222 von kritischen Geschwindigkeiten für das mobile Gerät bestimmt, und zwar basierend auf dem Satz 202 von verschiedenen Überwachungszonen, sowie z.B. auch basierend auf einen oder den mehreren möglichen vorgegebenen Bewegungspfaden, z.B. dem Bewegungspfad 132 aus Figur 1a. Die kritischen Geschwindigkeiten geben dabei jeweils eine maximal zulässige Geschwindigkeit für das mobile Gerät für jeweils eine Überwachungszonenkonfiguration an.

Hierzu können zunächst Begrenzungsflächen (oder, in 2D, Begrenzungslinien bzw. Kanten) von Geschwindigkeitsbereichen betrachtet werden. In Figur 3b ist beispielhaft eine solche Begrenzungsfläche 360 gezeigt, die zwischen den Geschwindigkeitsbereichen 356 und 356 liegt; diese Begrenzungsfläche kann zum Geschwindigkeitsbereich 356 oder aber zum Geschwindigkeitsbereich 357 gezählt werden. Um diese Zuordnung durchzuführen, kann z.B. eine Bewertungsfunktion (z.B. eine skalare Bewertungsfunktion) verwendet werden. Dabei kann ein Ziel sein, die Geschwindigkeitsbereich wie folgt zu ordnen:

Eine Bewertungsfunktion sei f, ein Zulässigkeitskriterium sei g (ein Geschwindigkeitsbereich bzw. die zugehörige Überwachungszone wird akzeptiert, wenn dies wahr bzw. "True" ist), es gebe zwei Geschwindigkeitsbereiche z1, z2, und eine Geschwindigkeit bzw. ein Geschwindigkeitsvektor sei t. Dann gilt:

$$(g(t, z1) == True)\ AND\ (g(t, z2) == False)\ \text{impliziert}\ f(z1) > f(z2)$$

Außerdem gilt dann:

$$(f(z1) \geq f(z2))\ AND\ (g(t, z2) == True)\ \text{impliziert}\ (g(t, z1) == True)$$

und:

$$(f(z1) \geq f(z2))\ AND\ (g(t, z1) == False)\ \text{impliziert}\ (g(t, z2) == False)$$

Die zu bevorzugende Überwachungszone bzw. der zu bevorzugende Geschwindigkeitsbereich ist damit eine bzw. einer mit geringerem Wert. Alle Werte (v, ω) innerhalb der Fläche werden diesem Geschwindigkeitsbereich zugewiesen. Ein Algorithmus kann durch die Zuweisung von Kanten zu Geschwindigkeitsbereichen (hier Flächen) mit geringem Aufwand eine Überschreitung/Unterschreitung der Begrenzungslinien prüfen und hat somit eine direkte Zuordnung in welchem Geschwindigkeitsbereich sich das mobile Gerät befindet und kann so auch die maximale Geschwindigkeit in einem Geschwindigkeitsbereich ermitteln.

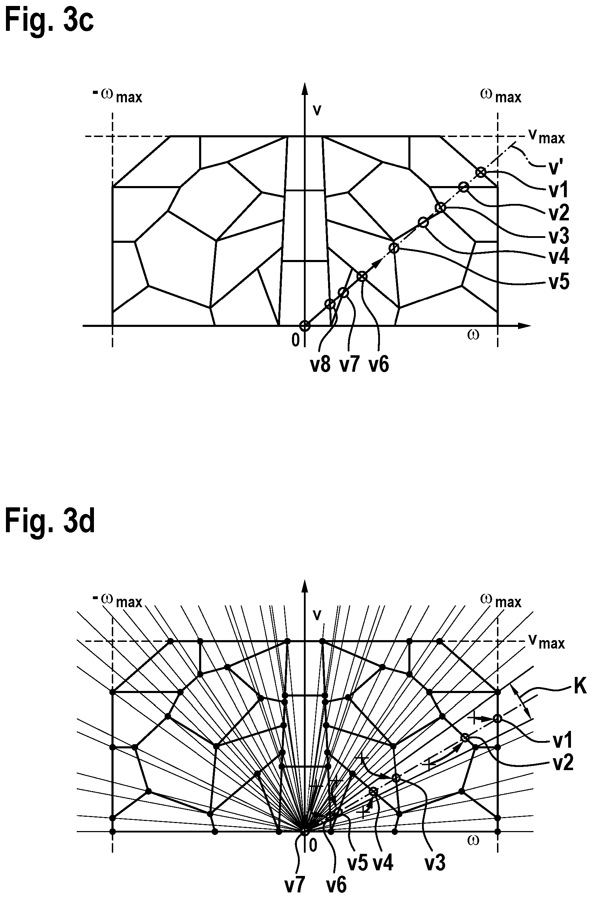

In Figur 3c sind nun mögliche Geschwindigkeiten mit einer Linie v' (entlang eines Pfeiles) dargestellt, die das mobile Gerät für einen möglichen Bewegungspfad einnehmen kann. Bei dem möglichen Bewegungspfad handelt es sich beispielhaft um eine Rechtskurve, die ein gewisses Verhältnis zwischen longitudinaler und Winkelgeschwindigkeit erfordert. Die kritischen Geschwindigkeiten geben, wie erwähnt, jeweils eine maximal zulässige Geschwindigkeit für das mobile Gerät für jeweils einen Geschwindigkeitsbereich, und damit eine Überwachungszonenkonfiguration an. Diese kritischen Geschwindigkeiten sind hier mit den Punkten v1 bis v8 bezeichnet.

In einem Schritt 230 kann, basierend auf der Sequenz von kritischen Geschwindigkeiten, die Trajektorie bestimmt werden, dabei kann, in Schritt 232, einer ausgewählten, insbesondere maximalen, kritischen Geschwindigkeit, aus der Sequenz von kritischen Geschwindigkeiten, sodass eine der ausgewählten kritischen Geschwindigkeit zuzuordnende Überwachungszonenkonfiguration dem Zulässigkeitskriterium genügt.

In dem gezeigten Beispiel können z.B. die Geschwindigkeitsbereichen 351, 352, 353 dem Zulässigkeitskriterium genügen, wenn die diesen Geschwindigkeitsbereichen zugeordneten Überwachszonen für ein mögliches Hindernis in bestimmtem Abstand keine Aktion auslösen würden. Die maximale Geschwindigkeit, die damit dem Zulässigkeitskriterium genügt, ist damit z.B. diejenige, die durch v6 gegeben ist. In einem Schritt 234 kann die Trajektorie dann, z.B. im Rahmen einer Optimierung, mit dieser kritischen Geschwindigkeit v6 bestimmt und, in Schritt 240, bereitgestellt werden. Es sei erwähnt, dass eine solche Trajektorie z.B. immer nur für einen gewissen Bewegungspfadabschnitt im Voraus bestimmt werden kann; dies kann dann immer wieder wiederholt werden.

Während die vorstehenden Erläuterungen allgemein gelten und nicht auf den 2D-Fall beschränkt sind, können im 2D-Fall jedoch gewisse Vereinfachen gemacht werden. Für den Fall von 2D-Geschwindigkeitsbereichen kann die lokale Bewegungspfadgeometrie nämlich auch durch eine (vorzeichenbehaftete) Krümmung K darstellen, wie in Figur 3d gezeigt. Die Ebene von longitudinaler Geschwindigkeit v und Winkelgeschwindigkeit w lässt sich in dreieckige Regionen aufteilen, wie durch Linien durch den Ursprung angedeutet ist. Eine Fläche zwischen zwei Krümmungsgrenzen kann eindeutig durch eine Krümmungsuntergrenze und Krümmungsobergrenze dargestellt werden.

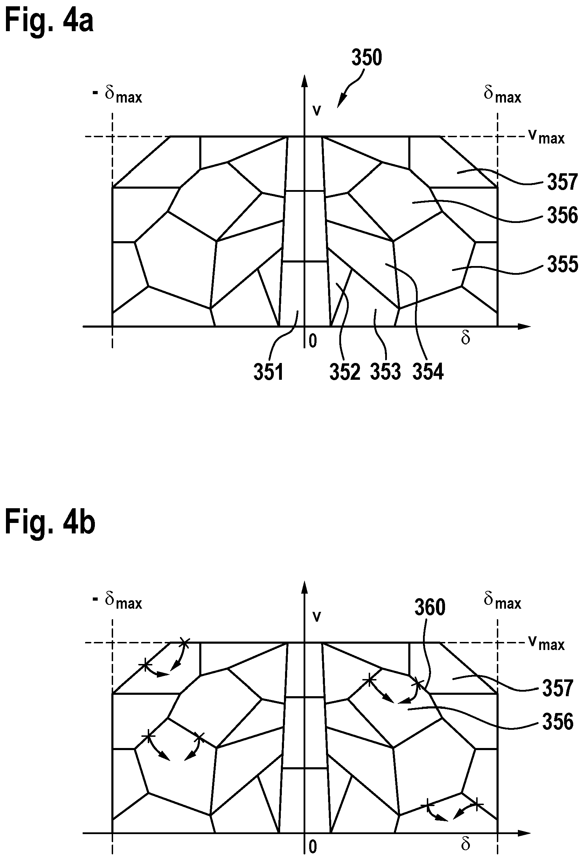

In den Figuren 4a bis 4d sind Diagramme vergleichbar den Diagrammen aus den Figuren 3a bis 3d gezeigt. Anstelle der longitudinalen Geschwindigkeit v und der Winkelgeschwindigkeit sind hier aber die longitudinale Geschwindigkeit v und ein Lenkwinkel $\delta$ aufgetragen. Die Geschwindigkeitsbereiche sind an sich jedoch auf die gleiche Weise verteilt, nur dass bei dem Zuordnungskriterium jetzt als Geschwindigkeit nur die longitudinale Geschwindigkeit v, zudem aber der Lenkwinkel $\delta$ relevant ist, wie in Figur 4a zu sehen.

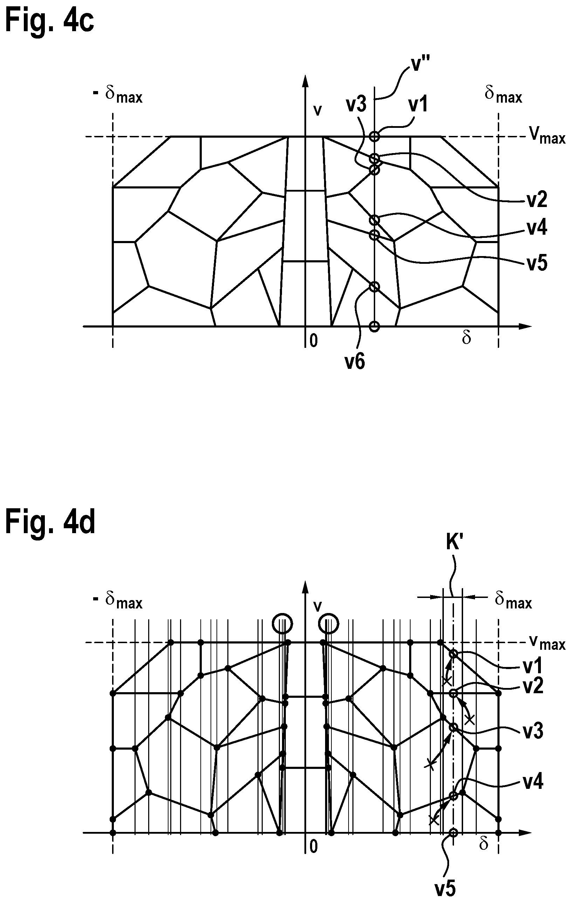

In Figur 4c ist zu sehen, dass die möglichen Geschwindigkeiten, die mit einer Linie v" gezeigt sind, parallel zur Achse der longitudinalen Geschwindigkeit v sind, da der Lenkwinkel an sich keine eigene Geschwindigkeitskomponente darstellt. Dies kann auch dazu führen, dass die Zuordnung der Fläche zu den Geschwindigkeitsbereichen abweicht. In Figur 4d ist zudem zu sehen, dass die lokale Bewegungspfadgeometrie auch durch eine (vorzeichenbehaftete) Krümmung K' darstellbar ist, die hier aber nur einen bestimmen Bereich des Lenkwinkels umfasst, also z.B. einen gewissen Spielraum für den Lenkwinkel lässt. Der übrige Ablauf des Verfahrens kann jedoch analog erfolgen.

**Patentansprüche**

1. Verfahren zum Bestimmen einer Trajektorie (130), welche einen Bewegungspfad und einen Geschwindigkeitsverlauf entlang des Bewegungspfads umfasst, gemäß welcher sich ein mobiles Gerät (100), insbesondere ein Roboter, oder ein sich zumindest teilautomatisiert bewegendes Fahrzeug, in einer Umgebung (120) entlang eines oder eines von mehreren möglichen vorgegebenen Bewegungspfaden (132) bewegen soll, umfassend:

Bereitstellen (200) eines Satzes (202) von verschiedenen Überwachungszonen (1521, 152, 153), wobei jede der verschiedenen Überwachungszonen jeweils einen Bereich um das mobile Gerät (100) definiert, in welchem Bereich das mobile Gerät (100) die Umgebung überwacht oder überwachen soll, wobei dem mobilen Gerät gemäß einem vorgegebenen Zuordnungskriterium (204) in Abhängigkeit von einer Geschwindigkeit des mobilen Geräts eine Überwachungszonenkonfiguration (206) zugeordnet ist, die jeweils eine vorbestimmte Überwachungszone des Satzes der verschiedenen Überwachungszonen umfasst, wobei, wenn ein Hindernis in einer aktuell zugeordneten Überwachungszone durch das mobile Gerät erkannt wird, durch das mobile Gerät eine Aktion durchzuführen ist;
Bereitstellen (210) eines Zulässigkeitskriteriums (212), das eine zulässige Überwachungszone aus dem Satz der verschiedenen Überwachungszonen angibt;
Bestimmen (220) einer Sequenz (222) von kritischen Geschwindigkeiten (v1-v8) für das mobile Gerät, basierend auf dem Satz von verschiedenen Überwachungszonen, wobei die kritischen Geschwindigkeiten jeweils eine maximal zulässige Geschwindigkeit für das mobile Gerät für jeweils eine Überwachungszonenkonfiguration angeben,
Bestimmen (230) der Trajektorie basierend auf der Sequenz von kritischen Geschwindigkeiten und basierend auf dem Zulässigkeitskriterium, insbesondere im Rahmen einer Optimierung; und
Bereitstellen (240) der Trajektorie, und insbesondere Veranlassen des mobilen Geräts, sich gemäß der Trajektorie zu bewegen,

**dadurch gekennzeichnet, dass** das Bestimmen (230) der Trajektorie basierend auf der Sequenz von kritischen Geschwindigkeiten umfasst:

Bestimmen (232) einer ausgewählten, insbesondere maximalen, kritischen Geschwindigkeit, aus der Sequenz von kritischen Geschwindigkeiten, sodass eine der ausgewählten kritischen Geschwindigkeit zuzuordnende Überwachungszonenkonfiguration dem Zulässigkeitskriterium genügt; und

Bestimmen (234) der Trajektorie basierend auf der ausgewählten kritischen Geschwindigkeit.

2. Verfahren nach Anspruch 1, wobei das Bestimmen der Sequenz von kritischen Geschwindigkeiten für das mobile Gerät basierend auf dem Satz von verschiedenen Überwachungszonen und basierend auf dem einen oder den mehreren möglichen vorgegebenen Bewegungspfaden erfolgt.

3. Verfahren nach einem der vorstehenden Ansprüche, wobei durch den einen oder die mehreren möglichen vorgegebenen Bewegungspfade jeweils mögliche Geschwindigkeiten für das mobile Gerät vorgegeben sind.

4. Verfahren nach Anspruch 3, wobei durch den einen oder die mehreren möglichen vorgegebenen Bewegungspfade weiterhin jeweils einer oder mehrere mögliche Lenkwinkel für das mobile Gerät vorgegeben sind.

5. Verfahren nach einem der vorstehenden Ansprüche, wobei die Geschwindigkeit des mobilen Geräts zumindest eine der folgenden Geschwindigkeiten umfasst:

   - eine longitudinale Geschwindigkeit (v),
   - eine laterale Geschwindigkeit, und
   - eine Winkelgeschwindigkeit ($\omega$).

6. Verfahren nach einem der vorstehenden Ansprüche, weiterhin umfassend:

   Bestimmen, basierend auf der Trajektorie, von Bewegungssteuergrößen für das mobile Gerät, und
   Bereitstellen der Bewegungssteuergrößen und/oder Bewegen des mobilen Geräts basierend auf den Bewegungssteuergrößen.

7. Recheneinheit (108) umfassend einen Prozessor, der so konfiguriert ist, dass er das Verfahren nach einem der vorstehenden Ansprüche ausführt.

8. Mobiles Gerät (100) das dazu eingerichtet ist, eine Trajektorie (130), die gemäß einem Verfahren nach einem der Ansprüche 1 bis 5 bestimmt worden ist, oder Bewegungssteuergrößen, die gemäß Anspruch 6 bestimmt worden sind, zu erhalten,

   mit einem Antriebssystem und einer Steuer- oder Regeleinheit zum Ansteuern des Antriebssystems basierend auf der Trajektorie und/oder den Bewegungssteuergrößen, und insbesondere mit einer Recheneinheit (108) nach Anspruch 7,
   und weiter insbesondere mit wenigstens einer Sensoreinheit (106) zum Erfassen von Hindernissen in der Umgebung, wobei das mobile Gerät dazu eingerichtet ist, eine Aktion auszuführen, wenn ein Hindernis in der dem mobilen Gerät aktuell zugeordneten Überwachungszonenkonfiguration erkannt wird.

9. Mobiles Gerät (100) nach Anspruch 8, das als sich zumindest teilweise automatisiert bewegendes Fahrzeug, insbesondere als Personenbeförderungsfahrzeug oder als Güterbeförderungsfahrzeug, oder als Roboter, insbesondere als Haushaltsroboter, z.B. Saug- und/oder Wischroboter, Boden- oder Straßenreinigungsgerät oder Rasenmähroboter, oder als Drohne ausgebildet ist.

10. Computerprogramm umfassend Befehle, die bei der Ausführung des Programms durch einen Computer diesen veranlassen, das Verfahren nach Anspruch 1 bis 6 auszuführen.

11. Computerlesbarer Datenträger, auf dem das Computerprogramm nach Anspruch 10 gespeichert ist.

## Claims

1. Method for determining a trajectory (130), which comprises a movement path and a velocity profile along the movement path, according to which a mobile device (100), in particular a robot, or a vehicle moving in an at least partially automated manner, is intended to move in an environment (120) along one or one of a plurality of possible predefined movement paths (132), comprising:

   providing (200) a set (202) of different monitoring zones (1521, 152, 153), wherein each of the different monitoring zones respectively defines a region around the mobile device (100), in which region the mobile device (100) monitors or is intended to monitor the environment, wherein the mobile device is assigned a monitoring zone configuration (206) in accordance with a predefined assignment criterion (204) on the basis of a velocity of the mobile device, said monitoring zone configuration comprising in each case a predetermined monitoring zone of the set of different monitoring zones, wherein, if an obstacle in a currently assigned monitoring zone is detected by the mobile device, an action is to be performed by the mobile device;

providing (210) a permissibility criterion (212) indicating a permissible monitoring zone from the set of different monitoring zones;

determining (220) a sequence (222) of critical velocities (v1-v8) for the mobile device based on the set of different monitoring zones, wherein the critical velocities each indicate a maximum permissible velocity for the mobile device for a respective monitoring zone configuration,

determining (230) the trajectory based on the sequence of critical velocities and based on the permissibility criterion, in particular within the scope of an optimization; and

providing (240) the trajectory, and in particular causing the mobile device to move in accordance with the trajectory,

**characterized in that** determining (230) the trajectory based on the sequence of critical velocities comprises:

> determining (232) a selected, in particular maximum, critical velocity from the sequence of critical velocities such that a monitoring zone configuration to be assigned to the selected critical velocity satisfies the permissibility criterion; and
> determining (234) the trajectory based on the selected critical velocity.

2. Method according to Claim 1, wherein the sequence of critical velocities for the mobile device is determined based on the set of different monitoring zones and based on the one or more possible predefined movement paths.

3. Method according to one of the preceding claims, wherein possible velocities for the mobile device are respectively predefined by the one or more possible predefined movement paths.

4. Method according to Claim 3, wherein one or more possible steering angles for the mobile device are furthermore respectively predefined by the one or more possible predefined movement paths.

5. Method according to one of the preceding claims, wherein the velocity of the mobile device comprises at least one of the following velocities:

> - a longitudinal velocity (v),
> - a lateral velocity, and
> - an angular velocity ($\omega$).

6. Method according to one of the preceding claims, additionally comprising:

> determining, based on the trajectory, movement control variables for the mobile device, and
> providing the movement control variables and/or moving the mobile device based on the movement control variables.

7. Computing unit (108) comprising a processor configured to perform the method according to one of the preceding claims.

8. Mobile device (100) configured to receive a trajectory (130) determined in accordance with a method according to one of Claims 1 to 5, or movement control variables determined according to Claim 6,

> having a drive system and a control or regulating unit for controlling the drive system based on the trajectory and/or the movement control variables, and in particular having a computing unit (108) according to Claim 7, and further in particular having at least one sensor unit (106) for sensing obstacles in the environment, wherein the mobile device is configured to carry out an action if an obstacle is detected in the monitoring zone configuration currently assigned to the mobile device.

9. Mobile device (100) according to Claim 8, which is designed as a vehicle moving in an at least partially automated manner, in particular as a passenger transport vehicle or as a goods transport vehicle, or as a robot, in particular as a household robot, e.g. a suction and/or wiping robot, floor or road cleaning device or robotic lawnmower, or as a drone.

10. Computer program comprising instructions which, when the program is executed by a computer, cause the latter to perform the method according to Claims 1 to 6.

11. Computer-readable data carrier on which the computer program according to Claim 10 is stored.


**Revendications**

1. Procédé de détermination d'une trajectoire (130), qui comprend une trajectoire de déplacement et un profil de vitesse le long de la trajectoire de déplacement, selon lequel un dispositif mobile (100), en particulier un robot, ou un véhicule mobile au moins partiellement automatisé, doit se déplacer dans un environnement (120) le long d'une ou plusieurs trajectoires de déplacement prédéfinies possibles (132), comprenant :

la fourniture (200) d'un ensemble (202) de différentes zones de surveillance (1521, 152, 153), chacune des différentes zones de surveillance définissant respectivement une région entourant l'appareil mobile (100), région dans laquelle l'appareil mobile (100) surveille ou doit surveiller l'environnement, une configuration de zone de surveillance (206) étant associée à l'appareil mobile conformément à un critère d'association prédéfini (204) en fonction d'une vitesse de l'appareil mobile, ladite configuration de zone de surveillance comprenant respectivement une zone de surveillance prédéterminée de l'ensemble des différentes zones de surveillance, dans lequel, lorsqu'un obstacle est reconnu par l'appareil mobile dans une zone de surveillance actuellement assignée, une action doit être effectuée par l'appareil mobile ;
la fourniture (210) d'un critère d'admissibilité (212) indiquant une zone de surveillance admissible dans l'ensemble des différentes zones de surveillance ;
la détermination (220) d'une séquence (222) de vitesses critiques (v1-v8) pour l'appareil mobile sur la base de l'ensemble de différentes zones de surveillance, les vitesses critiques indiquant respectivement une vitesse maximale admissible pour l'appareil mobile pour chaque configuration de zone de surveillance,
la détermination (230) de la trajectoire sur la base de la séquence de vitesses critiques et sur la base du critère d'admissibilité, notamment dans le cadre d'une optimisation ; et
la fourniture (240) de la trajectoire, et en particulier le fait d'amener l'appareil mobile à se déplacer conformément à la trajectoire,
**caractérisé en ce que** la détermination (230) de la trajectoire sur la base de la séquence des vitesses critiques comprend :

la détermination (232) d'une vitesse critique sélectionnée, en particulier maximale, à partir de la séquence de vitesses critiques, de telle sorte qu'une configuration de zone de surveillance à associer à la vitesse critique sélectionnée satisfasse au critère d'admissibilité ; et
la détermination (234) de la trajectoire sur la base de la vitesse critique sélectionnée.

2. Procédé selon la revendication 1, dans lequel la détermination de la séquence de vitesses critiques pour l'appareil mobile est effectuée sur la base de l'ensemble de différentes zones de surveillance et sur la base du ou des trajets de déplacement prédéterminés possibles.

3. Procédé selon l'une des revendications précédentes, dans lequel des vitesses respectivement possibles pour l'appareil mobile sont prédéfinies par le ou les trajets de déplacement prédéfinis possibles.

4. Procédé selon la revendication 3, dans lequel un ou plusieurs angles de braquage possibles pour l'appareil mobile sont en outre respectivement prédéfinis par le ou les trajets de déplacement prédéfinis possibles.

5. Procédé selon l'une des revendications précédentes, dans lequel la vitesse de l'appareil mobile comprend au moins l'une des vitesses suivantes :

- une vitesse longitudinale (v),
- une vitesse latérale, et
- une vitesse angulaire ($\omega$).

6. Procédé selon l'une des revendications précédentes, comprenant en outre :

la détermination, sur la base de la trajectoire, de variables de commande de déplacement pour l'appareil mobile, et

la fourniture des variables de commande de déplacement et/ou du déplacement de l'appareil mobile sur la base des variables de commande de déplacement.

7. Unité de calcul (108), comprenant un processeur qui est configuré de telle sorte qu'il met en œuvre le procédé selon l'une des revendications précédentes.

8. Appareil mobile (100), lequel est conçu pour obtenir une trajectoire (130), laquelle a été déterminée selon un procédé selon l'une des revendications 1 à 5 ou des variables de commande de déplacement qui ont été déterminées selon la revendication 6,

comprenant un système d'entraînement et une unité de commande ou de régulation destinée à commander le système d'entraînement sur la base de la trajectoire, et/ou des variables de commande de déplacement, et comprenant notamment une unité de calcul (108) selon la revendication 7,
et comprenant en outre au moins une unité de détection (106) pour détecter des obstacles dans l'environnement, l'appareil mobile étant conçu pour effectuer une action en cas de détection d'un obstacle dans la configuration de zone de surveillance actuellement associée à l'appareil mobile.

9. Appareil mobile (100) selon la revendication 8, lequel est réalisé sous la forme d'un véhicule se déplaçant de manière au moins partiellement automatisée, en particulier sous la forme d'un véhicule de transport de personnes ou sous la forme d'un véhicule de transport de marchandises, ou sous la forme d'un robot, notamment sous la forme d'un robot ménager, par exemple un robot d'aspiration et/ou de balayage, un appareil de nettoyage des sols ou des rues ou un robot de tonte de gazon, ou sous la forme d'un drone.

10. Programme informatique comprenant des instructions qui, lors de l'exécution du programme par un ordinateur, amènent celui-ci à mettre en œuvre le procédé selon les revendications 1 à 6.

11. Support de données lisible par ordinateur, sur lequel est stocké le programme informatique selon la revendication 10.

**Fig. 1a**

**Fig. 1b**

# Fig. 2

# Fig. 3a

# Fig. 3b

# Fig. 3c

# Fig. 3d

# Fig. 4a

# Fig. 4b

# Fig. 4c

# Fig. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3059650 A1
- EP 2952928 A1

- US 6173215 B1